# FASCICULE DE BREVET EUROPEEN

(11) **EP 1 606 220 B1**
(45) Date de publication et mention de la délivrance du brevet: **27.09.2006**
(21) Numéro de dépôt: 04742361.1
(22) Date de dépôt: 25.03.2004
(51) Int. Cl.: C02F 1/32

(54) **DISPOSITIF DE DESINFECTION D'EAU PAR RAYONNEMENT ULTRAVIOLET**
VORRICHTUNG ZUR DESINFEKTION VON WASSER DURCH ULTRAVIOLETTE STRAHLUNG
ULTRAVIOLET RADIATION WATER DISINFECTING DEVICE

(30) Priorité: 27.03.2003 FR 0303808
(43) Date de publication de la demande: 21.12.2005
(73) Titulaire: OTV SA, 94417 Saint-Maurice Cédex (FR)
(72) Inventeur: GIRODET, Pierre, F-92600 Asniere-sur-Seine (FR)
(74) Mandataire: Larcher, Dominique
(86) Numéro de dépôt international: PCT/FR2004/000756
(87) Numéro de publication internationale: WO 2004/085317

(56) Documents cités:
- WO-A-02/30827
- WO-A-02/072480
- DE-A- 19 957 073
- US-A1- 2002 113 021
- US-B1- 6 231 820
- LOGE F J ET AL: "ULTRAVIOLET DISINFECTION OF SECONDARY WASTEWATER EFFLUENTS: PREDICTION OF PERFORMANCE AND DESIGN" WATER ENVIRONMENT RESEARCH, WATER ENVIRONMENT FEDERATION, ALEXANDRIA, US, vol. 68, no. 5, 1 juillet 1996 (1996-07-01), pages 900-916, XP000626955 ISSN: 1061-4303

## Description

L'invention concerne le domaine du traitement des eaux en vue de leur désinfection, tant dans le cadre de procédés d'épuration que de dans le cadre de procédés de potabilisation.

Plus précisément, l'invention concerne la désinfection des eaux par rayonnement ultraviolet en chenal ouvert.

Selon une telle technique, l'eau à désinfecter transite dans un chenal ouvert dans sa partie supérieure à l'intérieur duquel sont disposés un ou plusieurs bancs de lampes dispensant un rayonnement ultraviolet d'une longueur d'ondes comprise entre 200 nm et 300 nm, usuellement 254 nm, ces bancs étant organisés en modules verticaux parallèles entre eux, chaque module étant constitué d'une ou plusieurs séries verticales de lampes UV protégées par des gaines en quartz disposés selon le sens d'écoulement de l'eau à désinfecter dans le chenal.

Ces bancs de lampes UV sont disposés dans le chenal de façon telle que l'ensemble des lampes soit immergées dans l'eau transitant dans celui-ci. Chaque module est maintenu en place grâce à une poutre pourvue de supports accueillant les lampes dans leur gaine transparente aux UV. Les lampes sont usuellement disposées de façon telle que leur axe longitudinal soit essentiellement parallèle à la direction d'écoulement de l'eau dans le chenal. Les chenaux de désinfection d'eau sont ainsi équipés de plusieurs bancs de lampes disposés dans le chenal les uns à la suite des autres.

La demande de brevet US 2002/0113021A1 montre un tel dispositif pour la désinfection des eaux par rayonnement ultraviolet en chenal ouvert.

Cette technique de désinfection existe depuis une vingtaine d'années. Au fur et à mesure de l'évolution de la technique, les lampes UV ont présenté une puissance de plus en plus grande, notamment grâce à la technologie des lampes UV basse pression, permettant à chaque banc de lampes de traiter une quantité d'eau de plus en plus importante.

Un des inconvénients de cette technique réside dans le fait qu' il se produit, au cours du cheminement de l'eau dans le chenal, une perte de charge au moment où l'eau rencontre les bancs de lampes. Au fur et à mesure de l'évolution de la technicité des lampes UV, cette perte de charge est devenue un facteur limitant de l'efficacité globale de ce type de technologie.

Afin de réduire cette perte de charge observée par l'eau lors de son passage dans les chenaux de désinfection UV, deux types de solutions ont déjà été proposés.

Une première solution a consisté à profiler les supports des lampes UV de façon à améliorer l'écoulement de l'eau.

Une autre solution a consisté à concevoir les connecteurs de façon telle qu'ils présentent une très faible résistance hydraulique tout en incorporant des moyens de fixation des lampes sur les supports à l'intérieur des gaines en quartz protégeant les lampes, et à combiner ces moyens avec des supports présentant une structure très légère.

Ces solutions présentent l'inconvénient d'être relativement onéreuses.

Par ailleurs, elles ne permettent pas un rapprochement optimisé des lampes, ce qui peut pénaliser le rendement global de chaque banc.

En effet, l'écartement des lampes a une importance fondamentale dans le rendement global du réacteur.

En particulier, lorsque les eaux traitées sont constituées par des eaux usées, la transmission du rayonnement ultraviolet est faible. En pratique, sur une lame d'eau de 1 cm, cette transmission peut être réduite de 50 % du fait de la concentration élevée de ce type d'effluent. En conséquence, plus les lampes des réacteurs UV seront proches les unes des autres et meilleur sera le rendement de celui-ci, en particulier pour les eaux de basse transmission UV. Toutefois, plus ces lampes UV sont proches , moins il y a de place pour permettre à l'eau de transiter à l'intérieur des bancs et plus la perte de charge est élevée.

Une perte de charge de quelques centimètres peut avoir des conséquences catastrophiques sur le rendement global d'une installation UV constituée de plusieurs bancs. En pratique, si cette perte de charge est trop élevée, on pourra observer une montée d'eau au niveau du premier banc et donc une accumulation de bactéries mal traitées en surface.

Parallèlement, les lampes supérieures des bancs suivants dans le sens de l'écoulement des eaux pourront se trouver dénoyés. Or, le dénoyage des lampes peut se révéler très néfaste dans la mesure où il occasionne une surchauffe de celles-ci et diminue considérablement leur durée de vie.

On comprend donc que ce problème de perte de charge revêt une importance particulièrement importante.

Un objectif de la présente invention est de présenter une solution simple permettant de résoudre en partie ce problème de perte de charge observé dans les installations classiques de désinfection d'eau par rayonnement UV en chenal ouvert.

En particulier, un objectif de la présente invention est de proposer une telle solution technique qui n'implique pas des modifications de fond de la conception des modules de désinfection constitués comme décrit ci-dessus par la superposition en rangées verticales de plusieurs lampes UV protégées par des gaines en quartz.

Ces objectifs sont atteints grâce à l'invention qui concerne un dispositif de désinfection d'eau par rayonnement ultraviolet destiné à être installé dans un chenal ouvert d'une installation de désinfection d'eau par rayonnement ultra-violet dans lequel l'eau à désinfecter s'écoule selon une direction D, ledit dispositif incluant une pluralité de moyens longitudinaux formant lampes UV constitués chacun d'une lampe UV, d'une gaine de protection en matériau transparent aux UV et de connecteurs disposés essentiellement longitudinalement selon ladite direction D et étant répartis en une pluralité de modules verticaux, chaque module étant constitué d'une poutre à laquelle sont fixés des moyens formant supports verticaux amont et aval accueillant au moins une série verticale desdits moyens formant lampes prévus sous ladite poutre les uns au-dessus des autres,
caractérisé en ce que lesdits moyens formant supports amont sont montés selon n plans essentiellement perpendiculaires à ladite direction D, n étant supérieur à 1.

On notera que le cadre de la présente invention, les termes "amont" et "aval "sont définis par rapport au sens d'écoulement de l'eau dans le chenal de l'installation selon la direction D.

Bien que l'on pourra prévoir un décalage des moyens formant support amont sans décalage des moyens formant lampe, ces moyens formant lampes présenteront préférentiellement des extrémités amont également situés dans p plans, p étant supérieur ou égal à n .

Selon la présente invention, les moyens formant supports amont ne se trouvent donc pas toutes dans le même plan perpendiculaire à la direction d'écoulement de l'eau dans le chenal. Ainsi, cette eau ne rencontre pas en même temps tous les moyens support amont , et corollairement tous les moyens formant lampes, mais rencontre d'abord une partie de ceux-ci puis au moins une autre partie de ceux-ci. Ainsi, la perte de charge observée par l'eau au moment
où elle rentre en contact avec le dispositif de désinfection est grandement diminuée.

On notera que l'invention couvre tous les cas de dispositions des moyens formant support amont des lampes selon lesquels ces supports amonts ne sont pas prévus dans un seul plan mais dans plusieurs plans, le nombre de plans n pourra donc être de 2, 3 voire plus.

Ainsi, selon l'invention, les moyens formant support amont sont décalés les uns par rapport aux autres, ce qui permet de moins freiner l'eau lorsqu'elle rentre en contact avec les modules constituant le dispositif de désinfection.

Par ailleurs, on notera que si les moyens formant support amont des moyens formant lampes du dispositif sont décalés les uns par rapport aux autres selon la présente invention, les lampes incluses dans les moyens formant lampes présentent préférentiellement des extrémités amont prévues dans un seul plan amont et des extrémités aval prévues dans un seul plan aval. Ainsi, la zone utile de ces moyens formant lampes constitués par les zones dans lesquelles les rayonnements des différentes lampes se combinent, n'est pas réduite. Selon une telle caractéristique, il est nécessaire par rapport aux moyens formant lampes de l'état de la technique de rallonger les gaines de matériau transparent au rayonnement ultraviolet qui protège les lampes, lampes elles-mêmes gardant la même longueur.

Comme déjà indiqué précédemment, on pourra prévoir un nombre de plans n dans lesquels sont disposées les moyens formant support amont de 2, 3 ou plus. De même on pourra prévoir un nombre de plans p dans lesquels sont disposées les extrémités des moyens formant lampes de 2, 3 ou plus. Toutefois, selon une variante préférentielle, le nombre de plans n sera égal à 2 et le nombre de plans p sera aussi égal à 2.

On pourra également prévoir une distance dans ces deux plans de décalage différente selon les modes de réalisation. Toutefois, selon une variante préférentielle, cette distance δ sera comprise entre environ 5 et environ 30 cm.

On notera également que si les moyens formant support amont sont, selon la présente invention, prévus dans au moins deux plans différents, les moyens formant support aval pourront se situer dans un seul ou dans des plans différents. Toutefois, selon un mode de réalisation préférentiel, lorsque les moyens formant support amont sont prévus dans n plans, les moyens formant support aval sont également prévues dans n plan.

Par rapport à l'art antérieur, la présente invention permet un meilleur écoulement de l'eau dans le dispositif de désinfection. Grâce à ce meilleur écoulement, il est possible de diminuer la distance séparant les moyens formant lampes les uns des autres pour obtenir une désinfection toute aussi efficace. En pratique, l'entraxe entre les axes des différents moyens formant lampes pourra être comprise ente 6 et 15 cm environ.

Parallèlement, il sera également possible de pourvoir les moyens formant lampes de gaines de protection de large diamètre de façon à réduire la lame d'eau transitant entre ceux-ci. En pratique, ces gaines pourront présenter, selon la présente invention, un diamètre compris entre 2 et 6 cm environ.

Bien que les poutres des différents modules pourront présenter des extrémités amont prévues dans des plans différents et des extrémités aval prévues dans des plans différents, ces poutres présenteront préférentiellement des extrémités amont prévues dans un même plan transversal à la direction d'écoulement de l'eau dans le chenal et des extrémités aval prévues dans un même plan transversal à la direction d'écoulement de l'eau dans le chenal.

L'invention couvre également toute installation de désinfection d'eau par rayonnement ultraviolet comprenant un chenal ouvert dans lequel l'eau à désinfecter s'écoule selon une direction D caractérisée en ce qu'elle inclut au moins un dispositif tel que décrit ci-dessus.

L'invention, ainsi que les différents avantages qu'elle présente seront plus facilement compris grâce à la description qui va suivre d'un mode non limitatif de réalisation de celle-ci donné en référence aux dessins dans lesquels :
- la figure 1 représente une installation en coupe transversale au niveau d'un dispositif de désinfection selon la présente invention;
- la figure 2 représente une vue en coupe longitudinale AA' de l'installation selon la figure 1 ;
- la figure 3 représente une vue en coupe longitudinale BB' de l'installation selon la figure 1 ;
- la figure 4 représente une vue de dessus de l'installation représentée à la figure 1 ;
- les figures 5 et 6 représentent des graphes de pertes de charges observées avec une installation selon l'art antérieur et avec l'installation selon les figures 1 à 4.

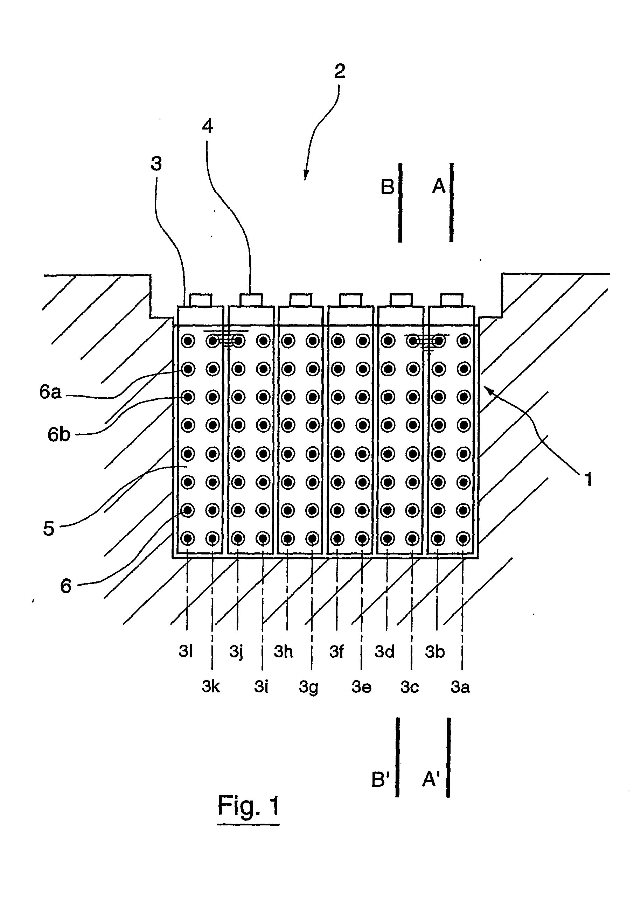

En référence à la figure 1, une installation de désinfection d'eau comprend un chenal 1 en béton (ou tout autre type de matériau, comme par exemple l'inox) ouvert dans sa partie supérieure dans lequel transite une eau à désinfecter.

Dans le but d'effectuer la désinfection de l'eau transitant dans le chenal 1, un dispositif de désinfection d'eau conforme à la présente invention est installé dans celui-ci.

Dans le cadre du présent mode de réalisation, ce dispositif 2 est constitué par l'association de six modules de désinfection 3 disposés parallèles entre eux. Une telle association de modules de désinfection est classiquement désignée par le terme "banc" par l'homme de l'art.

Chaque module est constitué par une poutre 4 à laquelle sont reliés des supports 5 (2 supports par poutre) accompagnant deux série verticales de moyens formant lampes 6.

Dans le cadre de cet exemple non limitatif de réalisation, la longueur des lampes est d'environ 150 cm et leur puissance est de 130 WUVC (watts UVC, les UVC étant les UV présentant une longueur d'onde entre 200 et 300 nm).

L'entraxe entre les moyens formant lampes est de 9 cm et le diamètre des gaines protégeant les lampes est de 3,5 cm.

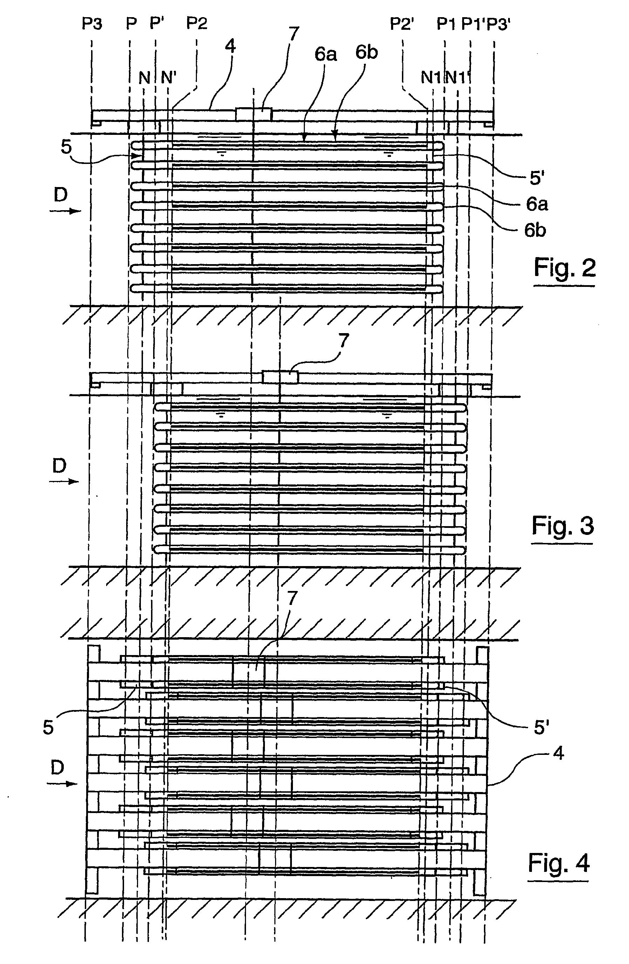

L'installation qui est représentée en coupe transversale avale à la figure 1, est représentée en coupe longitudinale à la figure 2 et à la figure3. Le sens d'écoulement de l'eau dans le chenal est défini par les flèches D sur ces figures.

La figure 2 est une vue en coupe de l'installation selon le plan AA' de la figure 1, tandis que la figure 3 est une vue en coupe de l'installation selon le plan BB' de la figure 1.

Les figures 2 et 3 montrent un module 3 vu de côté, ce module incluant une poutre 4 horizontale reliée à deux supports verticaux 5, à savoir 5, 5' accueillant les moyens formant lampe UV 6. Conformément à l'état de la technique, ces moyens formant lampes UV 6 sont constitués chacun par une lampe 6a émettant un rayonnement ultraviolet, protégée par une gaine 6b en matériau transparent aux rayonnements ultraviolets, en l'occurrence du quartz et de connecteurs (non représentés pour des besoins de clarté de la figure) à une des extrémités de la lampe.

D'une façon classique, chaque module 3 comprend également des moyens racleurs 7 montés coulissants sur la poutre 4 ainsi que sur les moyens formant lampes 6 de ce module selon une course correspondant à la longueur des lampes 6a. De tels moyens racleurs 7 permettent de nettoyer périodiquement les gaines des moyens formant lampe 6 et de les débarrasser des impuretés susceptibles de nuire à la diffusion du rayonnement UV émis par les lampes contenues dans ces gaines.

Conformément à la présente invention, les moyens formant support amont 5 du module représenté à la figure 2 sont prévus dans un plan N différent du plan N' dans lequel se situent les moyens formant support amont du module représenté à la figure 3. Corollairement, les extrémités amont des moyens formant lampes 6 du module représenté à la figure 2 sont dans un plan P différent du plan P' dans lequel se trouve les extrémités amonts des moyens formant lampes 6 du module représenté à la figure 3.

Dans le cadre du présent mode de réalisation, la distance δ entre les plans N et N' est de 15 cm.

Les moyens formant support amont 5 des différents modules constituant le banc 2 sont alternativement prévues dans le plan N et dans le plan N'.

Plus précisément, en référence à la figure 1, les rangées verticales de lampes 3a, 3b, 3e, 3f, 3i, 3j présentent des moyens formant support amont prévus dans le plan N, tandis que les rangées verticales de lampes 3c, 3d, 3g, 3h, 3k et 31 présentent des moyens formant support amont prévus dans le plan N'.

D'une telle manière, l'eau transitant dans le chenal subit une perte de charge diminuée du fait du décalage de positionnement des moyens formant support amont les uns par rapport aux autres.

Les moyens formant support aval 5' sont également prévus dans des plans décalés N1 et N1'.

On notera que tous les moyens formant lampes 6 de l'ensemble des modules présentent la même longueur. En conséquence, leurs extrémités aval se situent également dans des plans décalés l'un par rapport à l'autre P1 et P1', comme on peut le voir sur les figures 2 et 3.

Toutefois, afin de conférer une efficacité optimisée aux moyens formant lampes 6, les lampes 6a de ceux-ci sont toutes de même longueur et toute parallèle entre elle sur toute leur longueur. Elles présentent donc des extrémités amont prévues dans le même plan P2 et des extrémités aval prévues dans le même plan P2'. De ce fait, les moyens formant lampes 6 présentent une construction non symétrique, la distance entre les extrémité de la lampe et les extrémités de la gaine en quartz qui les protège n'étant pas la même à l' amont qu'à l'aval.

Comme on peut le voir sur les figures 2, 3 et 4, les extrémités amont et les extrémités aval des poutres 4 des différents modules de lampes 6 sont prévues dans les mêmes plans P3 et P3'.

L'installation décrite ci-dessus a été mise en oeuvre pour désinfecter une eau.

Une installation de l'état de la technique, présentant des moyens formant lampes non décalés mais de puissance identique à celle selon les figures 1 à 4 a été testée avec la même eau.

Les pertes de charge (PdC) observées avec l'installation selon la présente invention et avec l'installation selon l'état de la technique ont été mesurées en soustrayant de la hauteur h1 du niveau d'eau par rapport à une référence en amont du module la hauteur h2 du niveau d'eau par rapport cette même référence en aval du module (PdC = h1 - h2). Ces mesures ont été effectuées dans les deux cas (invention et art antérieur) en mettant en oeuvre des débits d'eau entrant dans les installations constants (172,5 m³/h et 180 m³/h) puis avec des débits variables. Pour chaque installation plusieurs mesures ont été effectuées à des temps différents.

Les résultats sont donnés dans les tableaux 1 à 6 ci-après.

Le tableau 1 concerne les résultats obtenus avec l'installation selon l'art antérieur, c'est-à-dire ne présentant pas de décalage des moyens formant support avec un débit constant de 172,5 m³/h.

**Tableau 1**

| Mesure n° | Q (m³/h) | h1 (cm) | h2 (cm) | PdC (cm) |
|---|---|---|---|---|
| 1 | 172,5 | 1,3 | 3,3 | 2 |
| 2 | 172,5 | 0,7 | 3,5 | 2,8 |
| 3 | 172,5 | 1 | 3,3 | 2,3 |
| 4 | 172,5 | 1,5 | 3,7 | 2,2 |
| 5 | 172,5 | 1,3 | 3,5 | 2,2 |
| 6 | 172,5 | 0,7 | 3,5 | 2,8 |
| 7 | 172,5 | 1,1 | 3,3 | 2,2 |
| 8 | 172,5 | 0,9 | 3,4 | 2,5 |
| 9 | 172,5 | 1 | 3,5 | 2,5 |
| Moyenne | 172,5 | 1,05 | 3,44 | 2,39 |
| Ecart type | 0 | 0,27 | 0,13 | 0,28 |

En moyenne, sur les 9 relevés effectués, la perte de charge observée est de 2,39 cm.+/- 0,28 cm.

Le tableau 2 concerne les résultats obtenus avec l'installation selon l'invention, c'est-à-dire montrant un décalage des moyens formant support, en mettant également en oeuvre un débit constant de 172,5 m³/h.

En moyenne, sur les 8 relevés effectués, la perte de charge observée est de 1,62 cm.+/- 0,30 cm soit un perte de charge améliorée de 47 % par rapport à l'art antérieur

**Tableau 2**

| Mesure n° | Q(m³/h) | h1(cm) | h2(cm) | PdC(cm) |
|---|---|---|---|---|
| 1 | 173 | 1 | 3 | 2 |
| 2 | 172 | 1,5 | 3 | 1,5 |
| 3 | 172,5 | 1,7 | 3 | 1,3 |
| 4 | 172,5 | 2 | 3,2 | 1,2 |
| 5 | 172,5 | 1,5 | 3 | 1,5 |
| 6 | 172,5 | 1,5 | 3,5 | 2 |
| 7 | 172,5 | 1,7 | 3,5 | 1,8 |
| 8 | 172,5 | 1,5 | 3,2 | 1,7 |
| Moyenne | 172,5 | 1,55 | 3,17 | 1,62 |
| Ecart type | 0,25 | 0,28 | 0,22 | 0,30 |

L'installation selon l'invention a également été testée avec un débit d'eau de 180 m³/h. Les résultats de perte de charge observées sont regroupés dans le tableau 3 ci-après.

**Tableau 3**

| Mesure n° | Q(m³/h) | h1 (cm) | h2(cm) | PdC(cm) |
|---|---|---|---|---|
| 1 | 180 | 0,5 | 1,7 | 1,2 |
| 2 | 180 | 0,5 | 1,7 | 1,2 |
| 3 | 180 | 0,7 | 1,7 | 1 |
| 4 | 180 | 0,5 | 1,5 | 1 |
| 5 | 180 | 0,3 | 1,5 | 1,2 |
| 6 | 180 | 0,5 | 1,7 | 1,2 |
| 7 | 180 | 0,5 | 1,8 | 1,3 |
| Moyenne | 180 | 0,5 | 1,66 | 1,16 |
| Ecart type | 0 | 0,11 | 0,11 | 0,11 |

En moyenne, sur les 7 relevés effectués, la perte de charge observée est de 1,16 cm.+/- 0,11 cm.

L'installation selon l'art antérieur et l'installation selon l'invention ont aussi été testées en mettant en oeuvre des débits Q entrants variables,

Les tableaux 4 et 5 indiquent les pertes de charges observées respectivement avec l'installation selon l'art antérieur (modules non décalés) et selon l'invention (modules décalés) avec de tels débits entrants variables. Lors de ces tests, on a laissé le niveau d'eau varier en aval de l'installation.

**Tableau 4**

| Q (m³/h) | Perte de .charge (cm) |
|---|---|
| 171 | 3 |
| 191,8 | 3,5 |
| 220 | 4,1 |
| 247 | 4,3 |
| 275 | 5,2 |
| 171 | 3,1 |
| 159 | 2,5 |
| 138,5 | 2,3 |
| 100 | 1,5 |
| 82 | 1,3 |
| 190 | 3,5 |
| 295 | 5,35 |

**Tableau 5**

| Q (m³/h) | Perte de charge (cm) |
|---|---|
| 171 | 3,9 |
| 189 | 4,5 |
| 219 | 4,7 |
| 247 | 5,16 |
| 275 | 5,3 |
| 157 | 3,5 |
| 135 | 2,8 |
| 106 | 2,2 |

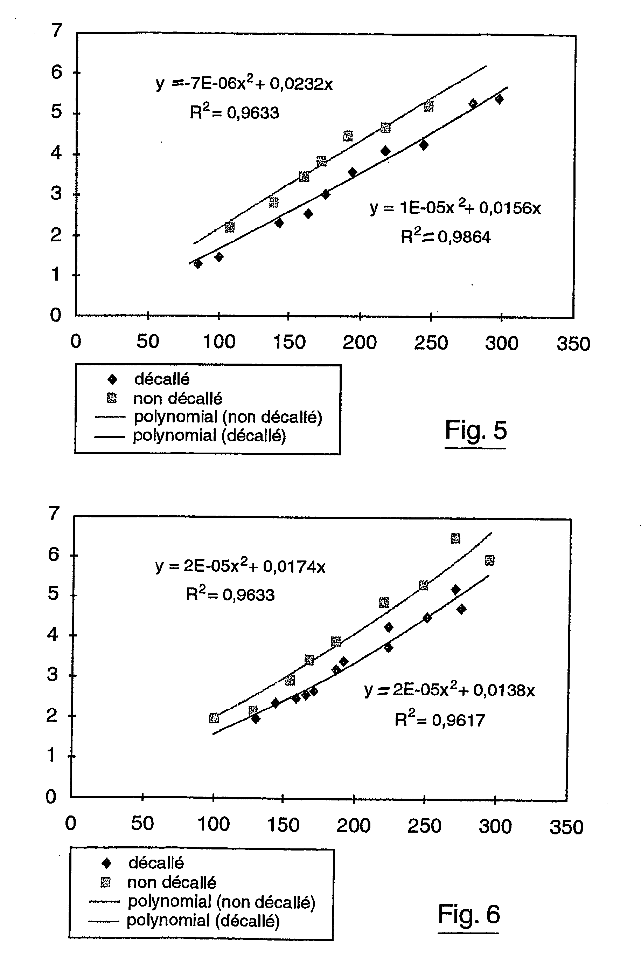

Les données selon les tableaux 4 et 5 sont portées sur les graphes représentés respectivement à la figure 5. Une interpolation polynomiale de ces données a été effectuée et permet de visualiser clairement, sous formes de courbes, l'avantage procuré par l'invention. La courbe représentative des données recueillies dans le cadre de la mise en oeuvre de la présente invention est en effet clairement située sous celle représentative des données recueillies avec l'installation de l'art antérieur, traduisant une diminution notable de la perte de charge.

Les tableaux 6 et 7 indiquent les pertes de charges observées respectivement avec l'installation selon l'art antérieur (modules non décalés) et selon l'invention (modules décalés) avec des débits entrants variables. Lors de ces tests, le niveau d'eau en aval des installations a été maintenu sensiblement constant.

**Tableau 6**

| Q (m³/h) | Perte de charge (cm) |
|---|---|
| 104 | 2 |
| 132 | 2,2 |
| 158 | 3 |
| 170 | 3,5 |
| 190 | 4 |
| 220 | 4,9 |
| 249 | 5,4 |
| 276 | 6,5 |
| 295 | 6 |

**Tableau 7**

| Q (m³/h) | Perte de charge (cm) |
|---|---|
| 133 | 2 |
| 148,8 | 2,5 |
| 161 | 2,6 |
| 169 | 2,7 |
| 173 | 2,8 |
| 190 | 3,3 |
| 194 | 3,5 |
| 220 | 4,3 |
| 220 | 3,8 |
| 249 | 4,5 |
| 273 | 5,3 |
| 277 | 4,6 |

Les données selon les tableaux 6 et 7 sont portées sur les graphes représentés respectivement à la figure 6. Une interpolation polynomiale de ces données a également été effectuée et permet de visualiser encore l'avantage procuré par l'invention.

Enfin, on notera que la présente invention permet également d'améliorer l'efficacité germicide de l'installation en permettant une plus grande homogénéité de la répartition de la dose reçue par les micro-organismes.

## Revendications

1. Dispositif de désinfection d'eau par rayonnement ultraviolet destiné à être installé dans un chenal ouvert (1) d'une installation de désinfection d'eau par rayonnement ultra-violet dans lequel l'eau à désinfecter s'écoule selon une direction D, ledit dispositif incluant une pluralité de moyens (6) longitudinaux formant lampes UV constitués chacun d'une lampe UV (6a), d'une gaine de protection (6b) en matériau transparent aux UV et de connecteurs disposés essentiellement longitudinalement selon ladite direction D et étant répartis en une pluralité de modules verticaux (3), chaque module étant constitué d'une poutre (4) à laquelle sont fixés au moins deux moyens formant supports verticaux (5) accueillant au moins une série desdits moyens formant lampes (6) prévus sous ladite poutre (4) les uns au-dessus des autres,
**caractérisé en ce que** lesdits moyens formant supports amont sont montés selon n plans distincts (N,N',N"...) essentiellement perpendiculaires à ladite direction D, n étant supérieur à 1.

2. Dispositif de désinfection d'eau par rayonnement ultraviolet selon la revendication 1 **caractérisé en ce que** lesdites extrémités amonts desdits moyens (6) formant lampes sont prévus selon p plans distincts (P, P') essentiellement perpendiculaires à ladite direction D, p étant supérieur ou égal à n.

3. Dispositif de désinfection d'eau par rayonnement ultraviolet selon la revendication 1 ou 2 **caractérisé en ce que** toutes les lampes (6a) desdits moyens formant lampes (6) présentent des extrémités amonts prévus dans un seul plan amont (P2) et des extrémités avals prévus dans un seul plan aval **(P2').**

4. Dispositif de désinfection d'eau par rayonnement ultraviolet selon l'une quelconque des revendication 2 à 3 **caractérisé en ce que** n et p sont égaux à 2.

5. Dispositif de désinfection d'eau par rayonnement ultraviolet selon la revendication 4 **caractérisé en ce que** les 2 plans (N, N') essentiellement perpendiculaires à ladite direction D sont séparés l'un de l'autre d'une distance comprise entre environ 5 cm et environ 30 cm.

6. Dispositif de désinfection d'eau par rayonnement ultraviolet selon l'une quelconque des revendications 1 à 5 **caractérisé en ce que** lesdits moyens (6) formant lampes présentent tous la même longueur.

7. Dispositif de désinfection d'eau par rayonnement ultraviolet selon l'une quelconques des revendications 1 à 6 **caractérisé en ce que** l'entraxe lesdits moyens (6) formant lampe est comprise entre environ 6 et environ 15 cm.

8. Dispositif de désinfection d'eau par rayonnement ultraviolet selon l'une quelconques des revendications 1 à 7 **caractérisé en ce que** chacun desdits moyens (6) formant lampe inclut une gaine en matériau transparent (6b) au rayonnement UV présentant un diamètre comprise entre environ 2 et environ 6 cm.

9. Dispositif de désinfection d'eau par rayonnement ultraviolet selon l'une quelconques des revendications 1 à 8 **caractérisé en ce que** les poutres (4) desdits modules présentent tous la même longueur et présentent des extrémités amonts prévus dans un seul plan transversal amont (P3) et des extrémités avals prévus dans un seul plan transversal aval (P'3).

10. Dispositif de désinfection d'eau par rayonnement ultraviolet selon l'une quelconques des revendications 1 à 9 **caractérisé en ce que** les moyens de support aval (5') sont montés selon n plans (N1.N1') essentiellement perpendiculaires à ladite direction D, n étant supérieur à 1.

11. Installation de désinfection d'eau par rayonnement ultraviolet comprenant un chenal ouvert (1) dans lequel l'eau à désinfecter s'écoule selon une direction D **caractérisée en ce qu'**elle inclut au moins un dispositif selon l'une quelconque des revendications 1 à 10 dans lesquels les moyens formant supports amont (5) des moyens formant lampes (6) sont montés selon n plans distincts (N,N') essentiellement perpendiculaires à ladite direction D, n étant supérieur à 1.

## Claims

1. Water disinfection device by ultraviolet radiation designed to be installed in an open channel (1) in a water disinfection installation by ultraviolet radiation in which the water to be disinfected flows along a direction D, the said device including a plurality of longitudinal means (6) forming UV lamps each consisting of a UV lamp (6a), a protective cladding (6b) made from a material transparent to UV rays, and connectors arranged essentially longitudinally along the said direction D and being distributed in a plurality of vertical modules (3), each module being composed of a beam (4) to which at least two means forming vertical supports (5) are fixed holding at least one series of the said means forming lamps (6) located under the said beam (4) one above the other,
**characterised in that** the said means forming upstream supports are mounted in n separate planes (N, N', N", etc.) essentially perpendicular to the said direction D, where n is more than 1.

2. Water disinfection device by ultraviolet radiation according to claim 1, **characterised in that** the said upstream ends of the said means (6) forming laps are located in p separate planes (P, P') essentially perpendicular to the said direction D, where p is greater than or equal to n.

3. Water disinfection device by ultraviolet radiation according to claim 1 or 2, **characterised in that** all lamps (6a) of the said means forming lamps (6) have upstream ends located in a single upstream plane (P2) and downstream ends located in a single downstream plane (P2').

4. Water disinfection device by ultraviolet radiation according to any one of claims 1 to 3, **characterised in that** n and p are equal to 2.

5. Water disinfection device by ultraviolet radiation according to claim 4, **characterised in that** the 2 planes (N, N') essentially perpendicular to the said direction D are separated from each other by a distance of between about 5 cm and about 30 cm.

6. Water disinfection device by ultraviolet radiation according to any one of claims 1 to 5, **characterised in that** the said means (6) forming lamps have all the same length.

7. Water disinfection device by ultraviolet radiation according to any one of claims 1 to 6, **characterised in that** the c/c distance of the said means (6) forming lamps is between about 6 and 15 cm.

8. Water disinfection device by ultraviolet radiation according to any one of claims 1 to 7, **characterised in that** each of the said means (6) forming a lamp includes a cladding made from a material (6b) transparent to UV rays with a diameter between about 2 and 6 cm.

9. Water disinfection device by ultraviolet radiation according to any one of claims 1 to 8, **characterised in that** the beams (4) of the said modules all have the same length and have upstream ends located in a single upstream transverse plane (P3) and downstream ends located in a single downstream transverse plane (P'3).

10. Water disinfection device by ultraviolet radiation according to any one of claims 1 to 9, **characterised in that** the upstream support means (5') are mounted in n planes (N1, N1') essentially perpendicular to the said direction D, where n is more than 1.

11. Water disinfection installation by ultraviolet radiation comprising an open channel (1) in which water to be disinfected flows along a direction D, **characterised in that** at least one device according to any one of claims 1 to 10 in which the means forming upstream supports (5) of means forming lamps (6) are mounted in n separate planes (N, N') essentially perpendicular to the said direction D, where n is more than 1.

## Patentansprüche

1. Vorrichtung zur Desinfektion von Wasser durch ultraviolette Strahlung, die in einer offenen Rinne (1) einer Anlage zur Desinfektion von Wasser durch ultraviolette Strahlung installiert wird, in der das zu desinfizierende Wasser in eine Richtung D fließt, wobei die besagte Vorrichtung eine Vielzahl von längsangeordneten Mitteln (6) umfasst, die UV-Lampen bilden, die jeweils aus einer UV-Lampe (6a), einer Schutzhülle (6b) aus UV-durchlässigem Material und Verbindungsstücken bestehen, die im Wesentlichen längs der besagten Richtung D angeordnet werden und auf eine Vielzahl von vertikalen Modulen (3) verteilt sind, wobei jedes Modul aus einem Balken (4) besteht, an dem mindestens zwei Mittel befestigt werden, die vertikale Träger (5) bilden, die mindestens eine Reihe der besagten Mittel aufnehmen, die Lampen (6) bilden und unter dem besagten Balken (4) übereinander vorgesehen werden,
**dadurch gekennzeichnet, dass** die besagten Mittel, die vordere Träger bilden, in n unterschiedlichen Ebenen (N, N', N"...) im Wesentlichen senkrecht zur besagten Richtung D montiert werden, wobei n größer ist als 1.

2. Vorrichtung zur Desinfektion von Wasser durch ultraviolette Strahlung gemäß Anspruch 1, **dadurch gekennzeichnet, dass** die besagten vorderen Enden der besagten Mittel (6), die Lampen bilden, in p unterschiedlichen Ebenen (P, P') im Wesentlichen senkrecht zur besagten Richtung D vorgesehen werden, wobei p größer oder gleich n ist.

3. Vorrichtung zur Desinfektion von Wasser durch ultraviolette Strahlung gemäß Anspruch 1 oder 2, **dadurch gekennzeichnet, dass** alle Lampen (6a) der besagten Mittel, die Lampen (6) bilden, vordere Enden aufweisen, die in einer einzigen vorderen Ebene (P2) vorgesehen werden und hintere Enden, die in einer einzigen hinteren Ebene (P2') vorgesehen werden.

4. Vorrichtung zur Desinfektion von Wasser durch ultraviolette Strahlung gemäß einem der Ansprüche 2 bis 3, **dadurch gekennzeichnet, dass** n und p gleich 2 sind.

5. Vorrichtung zur Desinfektion von Wasser durch ultraviolette Strahlung gemäß Anspruch 4, **dadurch gekennzeichnet, dass** die 2 Ebenen (N, N'), die im Wesentlichen senkrecht zur besagten Richtung D stehen, durch einen Abstand von etwa 5 cm bis etwa 30 cm voneinander getrennt sind.

6. Vorrichtung zur Desinfektion von Wasser durch ultraviolette Strahlung gemäß einem der Ansprüche 1 bis 5, **dadurch gekennzeichnet, dass** die besagten Mittel (6), die Lampen bilden, alle die gleiche Länge aufweisen.

7. Vorrichtung zur Desinfektion von Wasser durch ultraviolette Strahlung gemäß einem der Ansprüche 1 bis 6, **dadurch gekennzeichnet, dass** der Mittenabstand der besagten Mittel (6), die Lampen bilden, etwa 6 bis etwa 15 cm beträgt.

8. Vorrichtung zur Desinfektion von Wasser durch ultraviolette Strahlung gemäß einem der Ansprüche 1 bis 7, **dadurch gekennzeichnet, dass** jedes der besagten Mittel (6), die Lampen bilden, eine Hülle aus UVstrahlungsdurchlässigem Material (6b) umfasst, die einen Durchmesser von etwa 2 bis etwa 6 cm aufweist.

9. Vorrichtung zur Desinfektion von Wasser durch ultraviolette Strahlung gemäß einem der Ansprüche 1 bis 8, **dadurch gekennzeichnet, dass** die Balken (4) der besagten Module alle die gleiche Länge aufweisen und vordere Enden aufweisen, die in einer einzigen vorderen querstehenden Ebene (P3) vorgesehen werden, und hintere Enden, die in einer einzigen hinteren querstehenden Ebene (P'3) vorgesehen werden.

10. Vorrichtung zur Desinfektion von Wasser durch ultraviolette Strahlung gemäß einem der Ansprüche 1 bis 9, **dadurch gekennzeichnet, dass** die vorderen Trägermittel (5') in n Ebenen (N1, N1') im Wesentlichen senkrecht zur besagten Richtung D montiert werden und n größer ist als 1.

11. Anlage zur Desinfektion von Wasser durch ultraviolette Strahlung, die eine offene Rinne (1) umfasst, in der das zu desinfizierende Wasser in die Richtung D fließt, **dadurch gekennzeichnet, dass** sie mindestens eine Vorrichtung gemäß einem der Ansprüche 1 bis 10 umfasst, in denen die Mittel, die die vorderen Träger (5) der Mittel bilden, die Lampen (6) bilden, in n unterschiedlichen Ebenen (N, N') im Wesentlichen senkrecht zur besagten Richtung D angeordnet werden und nicht größer sind als 1.
